# EUROPÄISCHE PATENTSCHRIFT

(11) **EP 3 649 899 B1**
(45) Veröffentlichungstag und Bekanntmachung des Hinweises auf die Patenterteilung: **02.07.2025**
(21) Anmeldenummer: 19203245.6
(22) Anmeldetag: 15.10.2019
(51) Int. Cl.: A47C 31/12, A47C 27/14, B33Y 80/00

(54) **VERFAHREN ZUR HERSTELLUNG EINER PERSONENSPEZIFISCHEN MATRATZE**
METHOD OF MANUFACTURING A PERSONALIZED MATTRESS
PROCEDE DE FABRICATION D'UN MATELAS PERSONNALISÉ

(30) Priorität: 07.11.2018 DE 102018127734
(43) Veröffentlichungstag der Anmeldung: 13.05.2020
(73) Patentinhaber: Maier, Sven Oliver, 73087 Bad Boll (DE)
(72) Erfinder: Maier, Sven Oliver, 73087 Bad Boll (DE)
(74) Vertreter: Ruckh, Rainer Gerhard

(56) Entgegenhaltungen:
- EP-A1- 3 047 760
- WO-A1-2012/160508
- GB-A- 2 558 932
- US-A1- 2010 317 930
- US-A1- 2014 052 570

## Beschreibung

Die Erfindung betrifft ein Verfahren zur Herstellung einer personenspezifischen Matratze.

Ein derartiges Verfahren ist aus der DE 10 2015 100 816 B3 bekannt.

Das dort beschriebene Verfahren dient zur Herstellung eines körperstützenden Elements, das insbesondere in Form einer Matratze ausgebildet sein kann und umfasst folgende Verfahrensschritte:
- Vorgabe von Druckdaten, welche eine personenspezifische dreidimensionale Stützstruktur bilden
- Herstellung des körperstützenden Elements anhand der Druckdaten mittels eines 3D-Druckers.

Mit diesem Verfahren kann das jeweilige körperstützende Element individuell und exakt an die jeweiligen Bedürfnisse und Anforderungen der Person, die das körperstützende Element nutzen möchte, angepasst werden.

Die individuelle Anpassung des körperstützenden Elements an die Anforderungen der jeweiligen Person erfolgt allgemein durch die Vorgabe von Druckdaten in Form einer dreidimensionalen Stützstruktur. Diese Stützstruktur wird allgemein anhand von Messungen gewonnen, mittels derer das für die jeweilige Person zugeschnittene Anforderungsprofil des körperstützenden Elements ermittelt wird. Insbesondere kann das ortsaufgelöste Belastungsprofil für das körperstützende Element ermittelt werden. Insbesondere sind die Druckdaten von dreidimensionalen Geometriedaten mit ortsabhängigen Sollwerten für die Elastizität des herzustellenden körperstützenden Elements gebildet.

Die Ermittlung des ortsaufgelösten Belastungsprofils kann sich äußerst aufwendig gestalten. Insbesondere muss die jeweilige Person vor Ort zu Probemessungen zur Verfügung stehen, was sehr umständlich ist.

Die WO 2012/160508 A1 betrifft einen Körperscanner, mit dem Bilder einer Person aufgenommen werden. Weiterhin ist eine Vorrichtung zur Bestimmung des Gewichts der Person vorgesehen. Abhängig von den dabei ermittelten Daten werden Körper-Parameter der Person gewonnen. Abhängig von den Körper-Parametern wird eine individuelle Matratze mit Zonen unterschiedlicher Nachgiebigkeiten gefertigt.

Die US 2014/052570 A1 betrifft ein Verfahren für eine personenbezogene optimierte Auswahl einer Matratze aus einer Vielzahl von in einem Betrieb vorhandenen Matratzen. Hierzu werden Daten betreffend der Schlafgewohnheiten eines Kunden gesammelt. Anhand der Daten wird dann personengesteuert eine für den Kunden passende Matratze herausgesucht.

In der US 2010/317930 A1 wird eine Testmatratze beschrieben, die geeignete Sensorelemente aufweist, um das Belastungsprofil einer darauf liegenden Person zu bestimmen. Abhängig vom Ergebnis dieser Messungen werden Empfehlungen für die Auswahl von Zusatzmodulen für eine Matratze gegeben.

Der Erfindung liegt die Aufgabe zugrunde, ein Verfahren bereitzustellen, welches mit möglichst geringem Aufwand und bei größtmöglicher Flexibilität die Herstellung einer personenspezifischen Matratze ermöglicht.

Zur Lösung dieser Aufgabe sind die Merkmale des Anspruchs 1 vorgesehen. Vorteilhafte Ausführungsformen und zweckmäßige Weiterbildungen sind in den abhängigen Ansprüchen beschrieben.

Die Erfindung betrifft ein Verfahren zur Herstellung einer personenspezifischen Matratze, umfassend folgende Verfahrensschritte
- Bestimmung von Körpermerkmalen einer Person
- Ermittlung der Körperform der Person anhand der Körpermerkmale
- Ermittlung einer bevorzugten Schlafposition der Person mit einem Lagesensor
- Bestimmung eines ortsaufgelösten Sollfeldes von Eindringtiefen eines Modells für die herzustellende Matratze für die in der bevorzugten Schlafposition angeordnete Körperform
- Ermittlung von Soll-Materialsteifigkeiten aus den Eindringtiefen anhand eines Kraft-Weg-Kennfelds
- Generierung von Fertigungsdaten durch eine ortsaufgelöste Auswahl von Materialien und/oder Materialstrukturen aus einer Menge von Materialkennwerten zur Realisierung der Soll-Materialsteifigkeiten.

Ein erster wesentlicher Vorteil des erfindungsgemäßen Verfahrens besteht darin, dass die für die Herstellung der personenspezifischen Matratze benötigte Körperform der jeweiligen Person mit hinreichender Genauigkeit bereits aus einer beschränkten Anzahl von Körpermerkmalen abgeleitet werden kann, wobei typische Körpermerkmale die Schulterbreite, Taillenbreite, Hüftbreite und Größe der Person sind.

Damit kann mit einem äußerst geringen Aufwand die Körpergeometrie als wesentlicher Ausgangsparameter für das erfindungsgemäße Verfahren bestimmt werden.

Im einfachsten Fall sind die Körpermerkmale als Parameter mittels einer Eingabeeinheit in eine Rechnereinheit eingebbar.

Die Eingabe kann von der Person, für die die Matratze hergestellt wird, selbst durchgeführt werden.

Gemäß einer alternativen Ausführungsform werden die Körpermerkmale aus einem Bild der Person abgeleitet.

Das Bild kann die Person vor einem Spiegel stehend selbst aufnehmen.

Dabei enthält das Bild einen Referenzkörper mit bekannten Abmessungen. Durch Referenzierung der Bilddaten der Person auf die Abmessungen des Referenzkörpers werden die Körpermerkmale bestimmt.

Der Referenzkörper kann ein einfacher Gebrauchsgegenstand wie zum Beispiel ein DIN A4 Blatt, dessen Abmessungen genormt sind, sein. Durch die Referenzierung auf die Abmessungen des Referenzkörpers können aus den Bilddaten die Abmessungen der Körpermerkmale bestimmt werden.

Gemäß einer weiteren alternativen Ausführungsform werden die Körpermerkmale aus einer Sequenz von Bildern der Person abgeleitet.

In diesem Fall enthalten die Bilder der Sequenz einen Referenzkörper, der entlang einer Bahnkurve bewegt wird. Durch eine ortsaufgelöste Verfolgung dieser Bahnkurve werden Referenzabstandswerte gewonnen, anhand derer die Körpermerkmale bestimmt werden.

Auch in diesem Fall kann die Person selbst die Bildsequenz vor einem Spiegel stehend aufnehmen. Der Referenzkörper kann die Bildaufnahmeeinheit selbst sein, mit der die Bildaufnahmen durchgeführt werden. Die Bildaufnahmeeinheit weist zusätzlich zu einer Kamera eine GPS-Einheit oder Distanzmesseinheit auf, anhand derer aus den Bilddaten der Kamera Abstandswerte gewonnen werden können, in dem die Bahnkurve des Referenzkörpers vermessen wird und auf diese Messwerte die Bilddaten referenziert werden.

Besonders vorteilhaft ist die Bildaufnahmeeinheit in einem Smartphone integriert, in dem auch typisch eine GPS- oder Abstandsmesseinheit integriert sein kann.

Gemäß einer vorteilhaften Ausgestaltung werden die Körpermerkmale mit einer AR- (augmented reality) Einheit bestimmt.

Die AR-Einheit ist vorteilhaft in einem Smartphone integriert. Mit der AR-Einheit können auf einfache Weise Körperabmessungen als Körpermerkmale erfasst werden.

Erfindungsgemäß wird die bevorzugte Schlafposition der Person mit einem Lagesensor ermittelt.

Beispielsweise kann die Person während wenigstens einer Nacht den Lagesensor an einem Brustgurt oder dergleichen tragen, wobei dann der Lagesensor fortlaufend die Lagedaten der Person während der Schlafphase bestimmt. Daraus kann genau die bevorzugte Schlafposition, das heißt die Schlafposition, in der die Person am häufigsten schläft, bestimmt werden. Dieser Lagesensor kann insbesondere in einem Smartphone integriert sein.

Gemäß einer besonders vorteilhaften Weiterbildung der Erfindung sind sämtliche Einheiten, die zur Generierung der Fertigungsdaten benötigt werden in einem Smartphone integriert.

Gemäß einer vorteilhaften Erweiterung der Erfindung wird die bevorzugte Schlafposition bei auf eine Testmatratze aufliegender Person ermittelt, wobei die Testmatratze eine Sensoranordnung zur Erfassung von Eindringtriefen der Person in die Testmatratze aufweist.

Insbesondere weist die Sensoranordnung ein sich über die Oberfläche der Testmatratze erstreckendes Netzwerk von elektrisch leitfähigen Fäden auf.

Durch eine ortsaufgelöste Bestimmung von Widerstandänderungen der elektrisch leitfähigen Fäden bei Aufliegen der Person auf der Testmatratze kann die Lage der Person und auch deren Körperform bestimmt werden.

Vorteilhaft sind von den elektrisch leitfähigen Fäden generierte Sensorsignale über eine RFID-Einheit auslesbar. Die Sensorsignale können dann dezentral ausgewertet werden.

Damit ist zur Durchführung des erfindungsgemäßen Verfahrens nahezu kein zusätzlicher konstruktiver Aufwand erforderlich, da die Software zur Durchführung des Verfahrens in Form einer App auf einem handelsüblichen Smartphone integriert werden kann.

Ein weiterer wesentlicher Vorteil des erfindungsgemäßen Verfahrens besteht darin, dass für die bestimmte Körperform einer Person und deren bevorzugte Schlafposition für ein Modell der herzustellenden Matratze ein ortsaufgelöstes Sollfeld von Eindringtiefen vorgegeben werden kann.

Dies beruht darauf, dass aus der bestimmten Körperform auf das Gewicht der Person geschlossen werden kann. Für das Gewicht und die Körperform kann für die bevorzugte Schlafposition der Person dann ein hierfür optimales ortsaufgelöstes Sollfeld von Eindringtiefen der Matratze bestimmt, insbesondere berechnet werden. Als Berechnungsvorschrift wird dabei generell angesetzt, dass die Soll-Eindringtiefe im Bereich schwerer und breiter Körperpartien generell größer ist als im Bereich schmaler und leichter Körperpartien.

Diese Berechnung kann auf abgespeicherte Kennlinienfelder zurückgreifen, die insbesondere empirisch gewonnen wurden. Die Kennlinienfelder umfassen generell die Abhängigkeit bestimmter Eindringtiefen von Körperbreiten und/oder Körpergewichten einzelner Körperpartien.

Die Berechnung des ortsaufgelösten Sollfeldes von Eindringtiefen erfolgt generell bei in einer der bevorzugten Schlafposition entsprechenden Sollposition auf dem Modell angeordneten Körperform.

Überraschenderweise hat sich gezeigt, dass als Sollposition besonders eine Seitenlage des Körpers auf dem Modell geeignet ist. Für eine solche Positionierung der Körperform auf dem Modell der Matratze werden Eindringtiefen erhalten, die ein ideales Verhalten für unterschiedliche Liegepositionen der Person auf der fertiggestellten Matratze liefern.

Alternativ oder zusätzlich können die Eindringtiefen auch für eine Rücken- oder Bauchlage bestimmt werden, je nachdem wie die bevorzugte Schlafposition der Person ist.

Ein wesentlicher Vorteil besteht darin, dass zur optimierten Bestimmung der Eindringtiefen die jeweilige Person nicht anwesend sein muss. Vielmehr kann die Bestimmung der Eindringtiefen rein rechnerisch an dem Modell der Matratze erfolgen.

Anhand eines vorzugsweise in einem Einlernprozess bestimmten und in einer Speichereinheit abgespeicherten Kraft-Weg-Kennfeldes werden aus den ermittelten Eindringtiefen die Soll-Materialsteifigkeiten für die herzustellende Matratze ausgewählt.

Dies erfolgt einfach durch eine Auswahl von Materialkennwerten, die insbesondere in einer Speichereinheit gespeichert sind.

Im einfachsten Fall sind in der Speichereinheit die Materialsteifigkeiten von verschiedenen Materialsorten, beispielsweise verschiedenen Schaumstoffen hinterlegt. Diese Materialfestigkeiten, die insbesondere aus entsprechenden Datenblättern übernommen werden können, sind ausreichend, wenn die Matratzen aus homogenen Elementen, Zonen oder Gebieten solcher Materialien hergestellt werden.

Für den Fall, dass die herzustellende Matratze aus strukturierten, beispielsweise mit Hohlräumen durchsetzten Elementen, Zonen oder Gebieten aufgebaut werden soll, sind zur Bestimmung der Soll-Materialsteifigkeiten Messungen erforderlich, die im Einlernprozess durchgeführt werden.

Durch die ortsaufgelöste Auswahl von Materialien und/oder Materialstrukturen werden Fertigungsdaten generiert, die zur Herstellung der Matratze verwendet werden können.

Ein Vorteil der Erfindung besteht darin, dass die Fertigungsdaten so ausgebildet sind oder so aufbereitet werden, dass mehrere unterschiedliche Fertigungseinheiten zur Herstellung der personenspezifischen Matratze verwendet werden können.

Gemäß einer ersten Variante wird die Matratze aus einer Anzahl von Modulen mit unterschiedlichen Festigkeiten zusammengesetzt.

Vorzugsweise werden für Bereiche, in denen die Soll-Materialsteifigkeiten nahezu konstant sind, Module mit homogenen Materialsteifigkeiten gewählt. Durch diese Wahl von Modulen erfolgt eine Art Quantisierung der Ortsabhängigkeit der Materialsteifigkeiten. Durch eine passende Dimensionierung der Größen der Module wird jedoch eine hinreichende Ortsauflösung der Materialsteifigkeiten erhalten.

Gemäß einer zweiten Variante wird die Matratze mittels eines 3D-Druckers hergestellt.

Die Fertigungsdaten dienen dann zur Vorgabe von Druckdaten für den 3D-Drucker. In diesem Fall kann eine besonders hohe Ortsauflösung der Materialsteifigkeit der Matratze erhalten werden.

Bei beiden Varianten werden die Fertigungsdaten vorzugsweise berührungslos an die jeweilige Fertigungseinheit übertragen. Damit kann die Fertigungseinheit völlig frei gewählt werden, insbesondere unabhängig von der Einheit, die die Fertigungsdaten generiert.

Besonders vorteilhaft werden die Fertigungsdaten über das Internet an einen Cloud-Rechner übertragen, welcher der Fertigungseinrichtung zugeordnet ist.

In diesem Fall wird ein völlig dezentralisiertes Fertigungssystem realisiert, bei welchem die Fertigungsdaten überall auf der Welt über eine Cloud abgerufen werden können.

Die Erfindung wird im Folgenden anhand der Zeichnungen erläutert. Es zeigen:
- Figur 1:: Schematische Darstellung eines ersten Beispiels zur Bestimmung von Körpermerkmalen zur Durchführung des erfindungsgemäßen Verfahrens.
- Figur 2a:: Schematische Darstellung eines zweiten Beispiels zur Bestimmung von Körpermerkmalen zur Durchführung des erfindungsgemäßen Verfahrens.
- Figur 2b:: Schematische Darstellung eines dritten Beispiels zur Bestimmung von Körpermerkmalen zur Durchführung des erfindungsgemäßen Verfahrens.
- Figur 3:: Schematische Darstellung eines Beispiels zur Bestimmung eines ortsaufgelösten Sollfeldes von Eindringtiefen zur Durchführung des erfindungsgemäßen Verfahrens.
- Figur 4:: Beispiel einer mit dem erfindungsgemäßen Verfahren hergestellten Matratze.
- Figur 5:: Vorrichtung mit einem 3D-Drucker zur Herstellung der erfindungsgemäßen Matratze.
- Figur 6:: Darstellung einer Testmatratze zur Ermittlung der Lage einer Person
a) in einer Draufsicht,
b) in einer Schnittdarstellung.

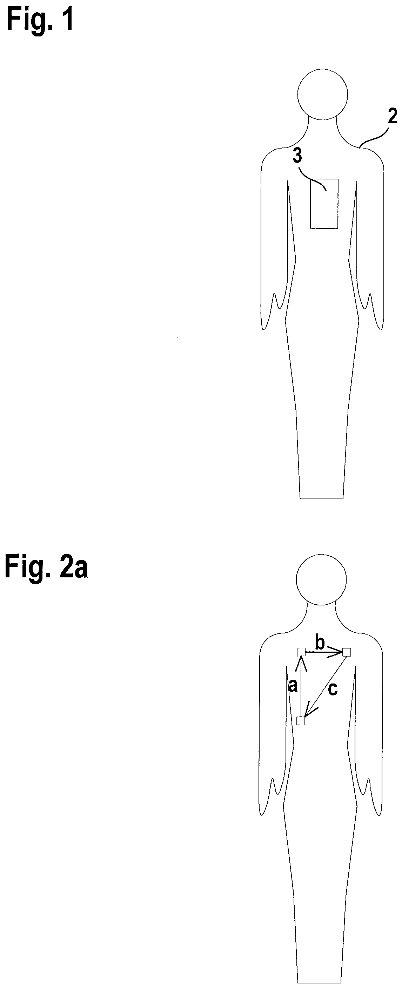

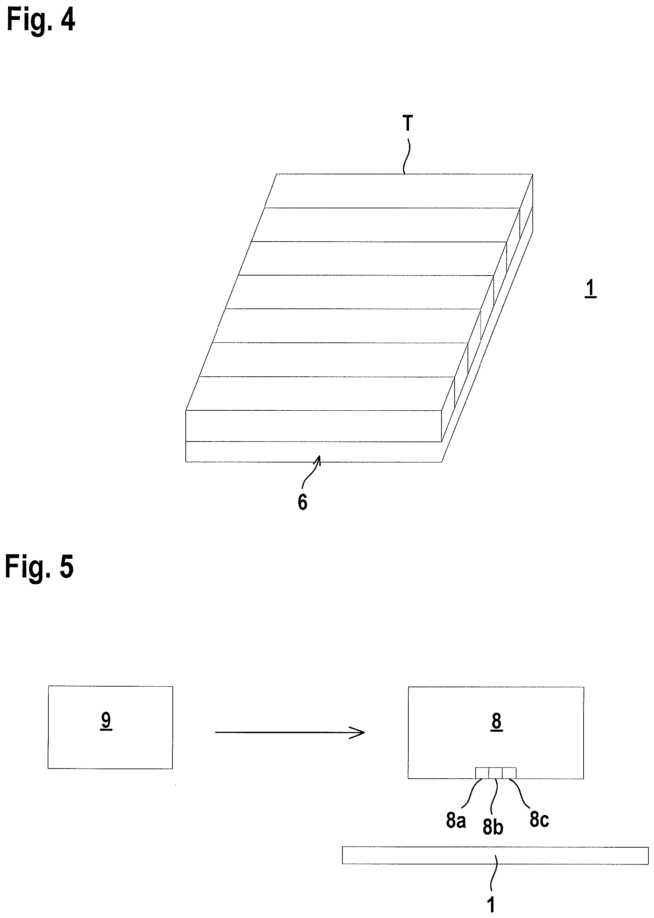

Die Figuren 1 bis 3 veranschaulichen Verfahrensschritte des erfindungsgemäßen Verfahrens zur Herstellung einer personenspezifischen Matratze 1, wie sie beispielhaft in Figur 4 oder 5 dargestellt ist.

Figur 1 zeigt ein Beispiel zur Ermittlung von Körpermerkmalen einer Person, für welche individuell angepasst eine Matratze 1 hergestellt werden soll.

Figur 1 zeigt schematisch den Umriss 2 einer Person, die vor sich als Referenzkörper 3 ein DIN A4 Blatt hält, dessen Abmessungen genormt und damit bekannt sind. Die Person fotografiert sich selbst in einem Spiegel, wobei sie hierzu die Kamera eines Smartphones nutzt. Auf dem Smartphone ist eine App zur Durchführung des erfindungsgemäßen Verfahrens installiert.

Die Bildaufnahme enthält die Bilddaten der Person zusammen mit dem Referenzkörper 3. Da die Abmessungen des Referenzkörpers 3 bekannt sind, können durch Referenzierung der Bilddaten auf den Referenzkörper 3 Körpermerkmale der Person mit deren Abmessungen bestimmt werden. Körpermerkmale dieser Art sind die Schulterbreite, Taillenbreite, Hüftbreite und/oder die Größe der Person.

In Figur 2a ist ein weiteres Beispiel zur Bestimmung von Körpermerkmalen veranschaulicht. In diesem Fall ist als Referenzkörper 3 das Smartphone selbst gewählt. Der Referenzkörper 3 wird entlang einer bestimmten Bahnkurve bewegt, im vorliegenden Fall entlang der geraden Strecken a, b, c. Diese Bewegung wird durch Aufnahme einer Bildsequenz festgehalten, indem sich die Person mit dem Smartphone vor einem Spiegel fotografiert. Durch eine GPS-Einheit wird die Bahnkurve des Referenzkörpers 3 ortsaufgelöst bestimmt, so dass diese zur Referenzierung der Bilddaten verwendet werden kann, so dass aus den Bilddaten die Abmessungen der Körpermerkmale bestimmt werden können.

Aus den Körpermerkmalen kann die Körperform und insbesondere das Körpergewicht der Person berechnet werden.

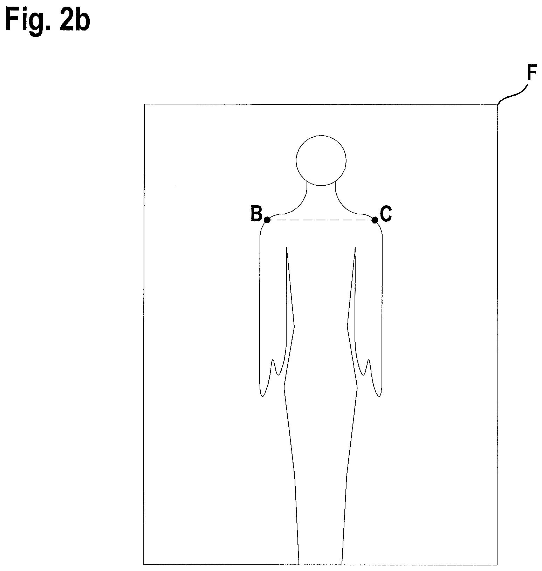

Figur 2b zeigt ein weiteres Beispiel zur Bestimmung von Körpermerkmalen, wobei in diesem Fall eine AR- (augmented reality) Einheit eingesetzt wird. Die AR-Einheit ist im vorliegenden Fall als App in einem Smartphone integriert. Figur 2b zeigt schematisch die Bildschirmfläche F des Smartphones. Auf dem Smartphone ist die Person sichtbar. Mit der AR-Einheit können Endpunkte B und C einer Strecke vorgegeben werden, um so Maße der Person zu bestimmen.

In einem Smartphone kann weiterhin ein Lagesensor integriert sein. Trägt die Person das Smartphone beispielsweise an einem Brustgurt über Nacht kann anhand der während der Schlafphase fortlaufend ermittelten Lagedaten die bevorzugte Schlafposition der Person, das heißt die Schlafposition, die die Person am häufigsten einnimmt, ermittelt werden.

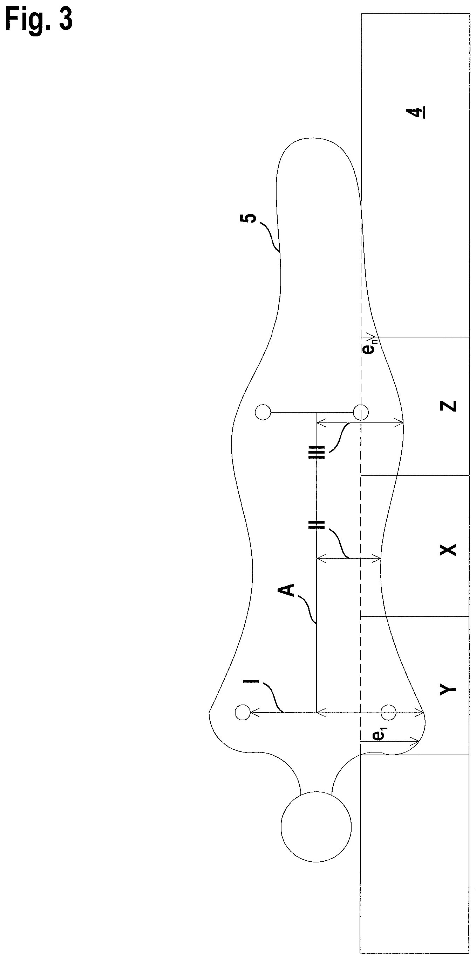

In einem weiteren Verfahrensschritt wird in einem Rechenmodell die ermittelte Körperform in einer der bevorzugten Schlafposition entsprechenden Sollposition auf einem Modell 4 der herzustellenden Matratze 1 positioniert. Figur 3 zeigt die entsprechende Körperkontur 5 in einer Seitenlage als Sollposition auf dem Modell 4 der Matratze 1. Als Bezugsachse A dient die Wirbelsäule der Person, die entlang einer horizontalen Geraden verlaufen soll. Da die Körpermerkmale und das Gewicht der Person bekannt sind, kann zum Beispiel durch Abrunden empirisch gewonnener Daten in einer Speichereinheit des Smartphones, für die Sollposition ein ortsaufgelöstes Sollfeld von Eindringtiefen e₁, eₙ des Modells 4 errechnet werden.

In Figur 3 sind exemplarisch zwei Eindringtiefen e₁, eₙ dieses Sollfelds dargestellt. Diese ergeben sich eindeutig in Abhängigkeit der Körpermerkmale Schulterbreite (mit I bezeichnet in Figur 3), Taillenbreite (mit II bezeichnet in Figur 3) und der Hüftbreite (mit III bezeichnet in Figur 3).

Wie Figur 3 zeigt, ergeben sich in den Bereichen X, Y, Z, wo der Schulter-, Taillen- oder Hüftbereich der Person aufliegt, stark unterschiedliche Eindringtiefen e₁, eₙ.

Aus einem in der Speichereinheit des Smartphones abgespeicherten Kraft-Weg-Kennfeldes, das beispielsweise in einem Einlernprozess bestimmt wird, werden aus dem Sollfeld der Eindringtiefen e₁, eₙ die Soll-Materialsteifigkeiten für die herzustellende Matratze 1 bestimmt.

Die den Soll-Materialsteifigkeiten entsprechende ortsabhängige Variation der Steifigkeit der herzustellenden Matratze 1 wird dadurch erhalten, dass aus einer Menge von in einer Speichereinheit abgespeicherten Materialkennwerten ortsabhängig eine Anzahl von Materialien und/oder Materialstrukturen ausgewählt werden. Materialstrukturen können homogene Elemente aus einem Material, Elemente aus verschiedenen Materialien oder Elemente aus einem Material mit Hohlraumstrukturen sein.

Durch diese Auswahl werden Fertigungsdaten erhalten, mittels derer die Matratze 1 mit einer Fertigungseinheit gefertigt werden kann. Die Fertigungsdaten können dabei berührungslos vorzugsweise über das Internet von dem Smartphone an die Fertigungseinheit gesendet werden.

Figur 4 zeigt ein Beispiel einer derartig gefertigten Matratze 1.

Die Matratze 1 besteht aus einer Grundplatte 6 und einer Anordnung von Trägereinheiten 7, die mittels Befestigungselementen auf der Oberseite der Grundplatte 6 befestigt sind und so eine rahmenlose Oberkonstruktion bilden. Die Trägereinheiten 7 erstrecken sich jeweils über die gesamte Breite der Grundplatte 6 und sind in Längsrichtung der Grundplatte 6 dicht aneinanderliegend angeordnet, so dass diese eine vollflächige, lückenlose Oberkonstruktion bilden.

Die Matratze 1 wird generell durch einen Bezug komplettiert, der über die Struktur mit der Grundplatte 6 und den Trägereinheiten 7 gestülpt ist. Dieser Bezug ist in Figur 4 nicht dargestellt.

Die Grundplatte 6 besteht aus einem homogenen Material, zum Beispiel einem Verbundschaum. Die Trägerelemente 7 bilden Module mit zumindest teilweise unterschiedlichen Materialsteifigkeiten, die entsprechend dem erfindungsgemäßen Verfahren hergestellt sind.

Insbesondere kann für den Bereich, wo die Schulterpartie der Person aufliegt (entsprechend dem Bereich Y in Figur 3) eine Trägereinheit 7 mit einer anderen Materialsteifigkeit als für eine Trägereinheit 7 für den Taillenbereich der Person (entsprechend dem Bereich X in Figur 3) und für den Hüftbereich (entsprechend dem Bereich Z in Figur 3). Generell können für die Bereiche X, Y, Z in Figur 3 auch mehrere Trägereinheiten 7 mit unterschiedlichen Materialsteifigkeiten vorgesehen sein, um die Ortsauflösung der Materialsteifigkeiten zu erhöhen.

Figur 5 zeigt ein Ausführungsbeispiel, bei dem die Herstellung der Matratze 1 mit einem 3D-Drucker 8 erfolgt. Der 3D-Drucker 8 wird von einem Cloud-Rechner 9 gesteuert. An den Cloud-Rechner 9 werden die Fertigungsdaten übertragen. Aus den Fertigungsdaten werden Druckdaten für den 3D-Drucker 8 generiert.

Als Komponenten zur Herstellung der Matratze 1 werden einerseits elastische Materialien in Form von elastomeren Materialien, insbesondere Kunststoffen, und andererseits Bindemittel verwendet. Die elastomeren Materialien liegen im 3D-Drucker 8 in Pulverform vor. Das Bindemittel liegt vorteilhaft in flüssiger Form vor.

Zum Austrag dieser Materialien weist der 3D-Drucker 8 Sprühmittel 8a, 8b, 8c auf, die in Form von Düsen oder dergleichen ausgebildet sein können. Zur Herstellung der Matratze 1 erfolgt mit den Sprühmitteln 8a, 8b, 8c ein schichtweiser Materialauftrag, wodurch die Matratze 1 schichtweise aufgebaut wird.

Zur Ausbildung einer Materialstruktur wird simultan über ein erstes Sprühmittel 8a pulverförmiges elastomeres Material und über ein zweites Sprühmittel 8b flüssiges Bindemittel ausgetragen, wobei sich diese Substanzen am Ort des Austrags verbinden und so lokal eine Materialstruktur ausbilden.

Um eine räumliche Variation der Elastizität der Matratze 1 zu erhalten, können in dem 3D-Drucker 8 gezielt an bestimmten Orten der Matratze 1 Hohlräume eingearbeitet werden. Ein Hohlraum an einem bestimmten Ort wird dadurch generiert, indem über das zweite Sprühmittel 8b kein Bindemittel ausgesprüht wird, so dass sich das über das erste Sprühmittel 8a ausgesprühte elastomere Material dort nicht mit dem Bindemittel zu einer Materialstruktur verbinden kann. Alternativ kann auch über das erste Sprühmittel 8a kein elastomeres Material ausgesprüht werden, so dass kein Ausschuss an pulverförmigem elastomeren Material entsteht.

Alternativ können zur Erzeugung von Bereichen unterschiedlicher Materialsteifigkeiten auch unterschiedliche elastische Materialien verwendet werden.

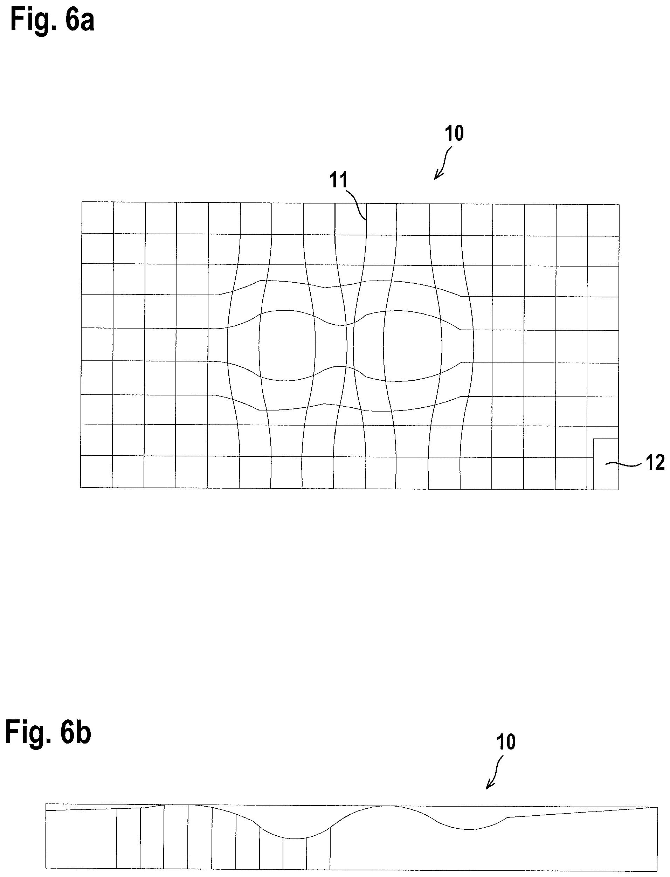

Die Figuren 6a und 6b zeigen ein Ausführungsbeispiel einer Testmatratze 10, mit der die bevorzugte Schlafposition und auch Körpermerkmale der Person ermittelt werden können. In die Testmatratze 10 ist eine Gitterstruktur von elektrisch leitfähigen Fäden 11 eingearbeitet, die an eine Auswerteeinheit mit einer RFID-Einheit 12 angeschlossen ist. Im unbelasteten Zustand bilden die elektrisch leitfähigen Fäden 11 ein rechteckiges oder quadratisches Gitter. Liegt eine Person auf der Testmatratze 10, dringt diese lokal in die Testmatratze 10 ein und die Gitterstruktur der elektrisch leitfähigen Fäden 11 sind wie in den Figuren 6a und 6b dargestellt verzerrt. Diese Verzerrungen führen zu lokalen Widerstandänderungen in der Gitterstruktur, die in der Auswerteeinheit erfasst und ausgewertet werden. Aus den Ergebnissen der Auswertung, die an eine externe Einheit übertragen werden, können die Lage einer Person und auch deren Maße bestimmt werden.

### Bezugszeichenliste

- (1): Matratze
- (2): Umriss
- (3): Referenzkörper
- (4): Modell
- (5): Körperkontur
- (6): Grundplatte
- (7): Trägereinheit
- (8): 3D-Drucker
- (8a): Sprühmittel
- (8b): Sprühmittel
- (8c): Sprühmittel
- (9): Cloud-Rechner
- (10): Testmatratze
- (11): Elektrisch leitfähiger Faden
- (12): RFID-Einheit

- A: Bezugsachse
- B, C: Endpunkte einer Strecke
- F: Bildschirmfläche
- X, Y, Z: Bereiche
- e₁: Eindringtiefe
- eₙ: Eindringtiefe
- a, b, c: Strecken

## Patentansprüche

1. Verfahren zur Herstellung einer personenspezifischen Matratze (1), umfassend folgende Verfahrensschritte
- Bestimmung von Körpermerkmalen einer Person
- Ermittlung der Körperform der Person anhand der Körpermerkmale
- Ermittlung einer bevorzugten Schlafposition der Person mit einem Lagesensor
- Bestimmung eines ortsaufgelösten Sollfeldes von Eindringtiefen (e₁, eₙ) eines Modells (4) für die herzustellende Matratze (1) für die in der bevorzugten Schlafposition angeordnete Körperform
- Ermittlung von Soll-Materialsteifigkeiten aus den Eindringtiefen (e₁, eₙ) anhand eines Kraft-Weg-Kennfelds
- Generierung von Fertigungsdaten durch eine ortsaufgelöste Auswahl von Materialien und/oder Materialstrukturen aus einer Menge von Materialkennwerten zur Realisierung der Soll-Materialsteifigkeiten.

2. Verfahren nach Anspruch 1, **dadurch gekennzeichnet, dass** die Materialkennwerte in einer Speichereinheit abgespeichert sind.

3. Verfahren nach einem der Ansprüche 1 oder 2, **dadurch gekennzeichnet, dass** das Kraft-Weg-Kennfeld in einem Einlernprozess bestimmt wird und in einer Speichereinheit abgespeichert wird.

4. Verfahren nach einem der Ansprüche 1 bis 3, **dadurch gekennzeichnet, dass** die Körpermerkmale als Parameter mittels einer Eingabeeinheit in eine Rechnereinheit eingebbar sind.

5. Verfahren nach einem der Ansprüche 1 bis 3, **dadurch gekennzeichnet, dass** die Körpermerkmale aus einem Bild der Person abgeleitet werden, wobei insbesondere das Bild einen Referenzkörper (3) mit bekannten Abmessungen enthält, wobei durch Referenzierung der Bilddaten der Person auf die Abmessungen des Referenzkörpers (3) die Körpermerkmale bestimmt werden.

6. Verfahren nach einem der Ansprüche 1 bis 3, **dadurch gekennzeichnet, dass** die Körpermerkmale aus einer Sequenz von Bildern der Person abgeleitet werden, wobei insbesondere die Bilder der Sequenz einen Referenzkörper (3) enthalten, der entlang einer Bahnkurve bewegt wird, wobei durch eine ortsaufgelöste Verfolgung dieser Bahnkurve Referenzabstandswerte gewonnen werden, anhand derer die Körpermerkmale bestimmt werden.

7. Verfahren nach einem der Ansprüche 1 bis 3, **dadurch gekennzeichnet, dass** die Körpermerkmale mit einer AR- (augmented reality) Einheit bestimmt werden.

8. Verfahren nach einem der Ansprüche 1 bis 7 **dadurch gekennzeichnet, dass** alle zur Erzeugung von Fertigungsdaten benötigten Einheiten in einem Smartphone integriert sind.

9. Verfahren nach einem der Ansprüche 1 bis 8 **dadurch gekennzeichnet, dass** die bevorzugte Schlafposition bei auf einer Testmatratze (10) aufliegenden Person ermittelt wird, wobei die Testmatratze (10) eine Sensoranordnung zur Erfassung von Eindringtriefen (e₁, eₙ) der Person in die Testmatratze (10) aufweist.

10. Verfahren nach Anspruch 9, **dadurch gekennzeichnet, dass** die Sensoranordnung ein sich über die Oberfläche der Testmatratze (10) erstreckendes Netzwerk von elektrisch leitfähigen Fäden (11) aufweist, wobei von den elektrisch leitfähigen Fäden (11) generierte Sensorsignale über eine RFID-Einheit (12) auslesbar sind.

11. Verfahren nach einem der Ansprüche 1 bis 10, **dadurch gekennzeichnet, dass** die Fertigungsdaten an eine Fertigungseinrichtung vorzugsweise berührungslos übertragen werden.

12. Verfahren nach Anspruch 11, **dadurch gekennzeichnet, dass** die Fertigungsdaten über das Internet an einen Cloud-Rechner (9) übertragen werden, welcher der Fertigungseinrichtung zugeordnet ist.

13. Verfahren nach einem der Ansprüche 1 bis 12, **dadurch gekennzeichnet, dass** die Matratze (1) aus einer Anzahl von Modulen mit unterschiedlichen Festigkeiten zusammengesetzt wird.

14. Verfahren nach einem der Ansprüche 1 bis 12, **dadurch gekennzeichnet, dass** die Matratze (1) mittels eines 3D-Druckers (8) hergestellt wird.

## Claims

1. A method of manufacturing a personalised mattress (1), comprising the following steps
- Determining a person's physical characteristics
- Determining the person's body shape based on body characteristics
- Determining a person's preferred sleeping position with a position sensor
- Determining a spatially resolved nominal field of indentation depths (e₁, eₙ) of a model (4) for the mattress (1) to be manufactured for the body shape when in the preferred sleeping position
- Determining the target material stiffness from the indentation depths (e₁, eₙ) using a force-displacement map
- Generating production data through a spatially resolved selection of materials and/or material structures from a set of material parameters to provide the target material stiffness.

2. A method according to claim 1, **characterised in that** the material characteristics are stored in a memory unit.

3. A method according to one of claims 1 or 2, **characterised in that** the force-displacement map is determined in a teach-in process and is stored in a memory unit.

4. A method according to one of claims 1 to 3, **characterised in that** the body features can be entered into a computer unit as parameters by means of an input unit.

5. A method according to one of claims 1 to 3, **characterised in that** the body features are derived from an image of the person, wherein in particular the image contains a reference body (3) with known dimensions, wherein the body features are determined by referencing the image data of the person to the dimensions of the reference body (3).

6. A method according to one of claims 1 to 3, **characterised in that** the body features are derived from a sequence of images of the person, wherein in particular the images of the sequence contain a reference body (3) which is moved along a path curve, wherein reference distance values are obtained by spatially resolved tracking of this path curve, on the basis of which the body features are determined.

7. A method according to one of claims 1 to 3, **characterised in that** the body features are determined using an AR (augmented reality) unit.

8. A method according to one of claims 1 to 7, **characterised in that** all units required for generating production data are integrated in a smartphone.

9. A method according to one of claims 1 to 8, **characterised in that** the preferred sleeping position is determined with the person lying on a test mattress (10), wherein the test mattress (10) has a sensor arrangement for detecting penetration depths (ei, eₙ) of the person into the test mattress (10).

10. A method according to claim 9, **characterised in that** the sensor arrangement comprises a network of electrically conductive threads (11) extending over the surface of the test mattress (10), wherein the detection signals generated by the threads (11) can be read out via an RFID unit (12).

11. A method according to one of claims 1 to 10, **characterised in that** the production data are transmitted to a production device, preferably without contact.

12. A method according to claim 11, **characterised in that** the production data is transmitted via the Internet to a cloud computer (9) which is assigned to the production device.

13. A method according to one of claims 1 to 12, **characterised in that** the mattress (1) is composed of a number of modules with different firmness.

14. A method according to one of claims 1 to 12, **characterised in that** the mattress (1) is produced by means of a 3D printer (8).

## Revendications

1. Procédé de fabrication d'un matelas personnalisé (1), comprenant les étapes suivantes
- Déterminer les caractéristiques physiques d'une personne
- Déterminer la forme du corps de la personne en fonction de ses caractéristiques corporelles
- Déterminer la position de sommeil préférée d'une personne à l'aide d'un capteur de position
- Déterminer un champ nominal résolu dans l'espace des profondeurs d'indentation (e₁, eₙ) d'un modèle (4) pour le matelas (1) à fabriquer pour la forme du corps dans la position de sommeil préférée.
- Déterminer la rigidité des matériaux cibles à partir des profondeurs d'indentation (e₁, eₙ) à l'aide d'un graphique force-déplacement
- Générer des données de production par une sélection résolue dans l'espace de matériaux et/ou de structures de matériaux à partir d'un ensemble de paramètres de matériaux afin d'obtenir la rigidité cible des matériaux.

2. Procédé selon la revendication 1, **caractérisé par le fait que** les caractéristiques des matériaux sont stockées dans une unité de mémoire.

3. Procédé selon l'une des revendications 1 ou 2, **caractérisé par le fait que** la carte force-déplacement est déterminée au cours d'un processus d'apprentissage et est stockée dans une unité de mémoire.

4. Procédé selon l'une des revendications 1 à 3, **caractérisé par le fait que** les caractéristiques du corps peuvent être introduites dans une unité informatique sous forme de paramètres au moyen d'une unité d'entrée.

5. Procédé selon l'une des revendications 1 à 3, **caractérisé par le fait que** les caractéristiques corporelles sont dérivées d'une image de la personne, dans laquelle l'image contient en particulier un corps de référence (3) aux dimensions connues, les caractéristiques corporelles étant déterminées en référençant les données d'image de la personne aux dimensions du corps de référence (3).

6. Procédé selon l'une des revendications 1 à 3, **caractérisé par le fait que** les caractéristiques du corps sont dérivées d'une séquence d'images de la personne, dans laquelle en particulier les images de la séquence contiennent un corps de référence (3) qui est déplacé le long d'une courbe de trajectoire, dans laquelle les valeurs de distance de référence sont obtenues par le suivi résolu dans l'espace de cette courbe de trajectoire, sur la base de laquelle les caractéristiques du corps sont déterminées.

7. Procédé selon l'une des revendications 1 à 3, **caractérisé par le fait que** les caractéristiques du corps sont déterminées à l'aide d'une unité de réalité augmentée.

8. Procédé selon l'une des revendications 1 à 7, **caractérisé par le fait que** toutes les unités nécessaires pour générer des données de production sont intégrées dans un smartphone.

9. Procédé selon l'une des revendications 1 à 8, **caractérisé par le fait que** la position de sommeil préférée est déterminée lorsque la personne est allongée sur un matelas d'essai (10), le matelas d'essai (10) étant doté d'un capteur permettant de détecter les profondeurs de pénétration (e₁, eₙ) de la personne dans le matelas d'essai (10).

10. Procédé selon la revendication 9, **caractérisé par le fait que** le dispositif de détection comprend un réseau de fils conducteurs (11) s'étendant sur la surface du matelas d'essai (10), les signaux de détection générés par les fils conducteurs (11) pouvant être lus par une unité RFID (12).

11. Procédé selon l'une des revendications 1 à 10, **caractérisé par le fait que** les données de production sont transmises à un dispositif de production, de préférence sans contact.

12. Procédé selon la revendication 11, **caractérisé par le fait que** les données de production sont transmises par Internet à un ordinateur en nuage (9) affecté au dispositif de production.

13. Procédé selon l'une des revendications 1 à 12, **caractérisé par le fait que** le matelas (1) est composé de plusieurs modules de fermeté différente.

14. Procédé selon l'une des revendications 1 à 12, **caractérisé par le fait que** le matelas (1) est produit au moyen d'une imprimante 3D (8).
